# EUROPEAN PATENT APPLICATION

(11) **EP 3 498 790 A1**
(43) Date of publication of application: **19.06.2019**
(21) Application number: 17839161.1
(22) Date of filing: 19.07.2017
(51) Int. Cl.: C09D 11/36, B41J 2/01, B41M 5/00

(54) **NON-AQUEOUS INK COMPOSITION**

(30) Priority: 10.08.2016 JP 2016157690
(71) Applicant: Sakata INX Corporation, Osaka-shi, Osaka 550-0002 (JP)
(72) Inventor: AOKI Yoshiyuki, Osaka-shi Osaka 550-0002 (JP); NAKASHIMA Okinori, Osaka-shi Osaka 550-0002 (JP); KINJYO Jun, Osaka-shi Osaka 550-0002 (JP); MIYAKE Ryohei, Osaka-shi Osaka 550-0002 (JP)
(74) Representative: Grünecker Patent- und Rechtsanwälte PartG mbB
(86) International application number: PCT/JP2017/026099
(87) International publication number: WO 2018/030088

(57) **Abstract**

An object of the present invention is to provide a nonaqueous ink composition offering excellent adhesion to printing media, rub resistance, and solvent resistance, even when printed on roll materials (acrylic, PET, etc.), board materials (glass, plastics, etc.), and other nonabsorbent media, even in a high-speed printing mode, while also exhibiting excellent discharge stability. As a solution, a nonaqueous ink composition containing a chlorinated polyolefin resin and a ketone resin is provided, wherein the chlorinated polyolefin resin and ketone resin together account for at least 10 percent by mass in the ink composition, the chlorine content in the chlorinated polyolefin resin is 30 to 50 percent by mass, and the chlorinated polyolefin resin and ketone resin are contained at a ratio by mass, calculated by "Chlorinated polyolefin resin/Ketone resin," of 3/7 to 7/3.

## Description

### Technical Field

The present invention relates to a nonaqueous ink composition suitable for use in the manufacture of printed matters whose printing surface is constituted by glass, aluminum sheet, plastic film, or other nonabsorbent material, as well as a printed matter obtained using such nonaqueous ink composition.

### Background Art

Nowadays, a growing number of billboard ads are featuring photographic images of products and people's faces, in addition to logos and patterns of vivid colors and sophisticated designs. In addition, many billboard ads are produced in large sizes to give stronger impact on the viewers. In general, traditional ways to produce billboard ads have been to cut out letters from colored sheets and attach the cutout letters to create logos, or to utilize various printing presses to create photographic images. However, these methods present problems in that they are time-consuming and labor-intensive and require large equipment such as printing presses.

Accordingly, attempts are made to simplify the production of billboards featuring vivid images by utilizing the inkjet method that permits designs created on a personal computer to be printed directly on base materials.

One feature of the inkjet method is that it supports a wide range of base materials to be printed on, making printing on paper, polymer, metal and other hard and soft sheet materials not only possible, but effortless. For billboard ads that are installed outdoors and must therefore be lightweight, exceptionally strong and durable, resistant to rain, and also affordable, the inkjet method that permits easy printing on polymer sheets offering these exact properties present a significant advantage.

In addition, super-wide-format inkjet printers accommodating printing widths of 2,000 mm or more have emerged of late, making the production of billboards even easier by allowing large printed matters to be produced in a single step instead of attaching smaller pieces together as the traditional method requires.

In general, tarpaulin is a common polymer sheet used for billboard ads. For reference, tarpaulin is a composite sheet using polyester or polyamide as a core material, on top and bottom of which a polyvinyl chloride polymer, ethylene-vinyl acetate copolymer, or other vinyl polymer is laminated.

For inkjet ink compositions to print on these composite sheets, nonaqueous inkjet ink compositions based on organic solvents (environmentally-friendly organic solvents in recent years) are used. Nonaqueous inkjet ink compositions must use materials having good wettability, drying property, fixing property, etc., on polyvinyl chloride polymers, ethylene-vinyl acetate copolymers and other vinyl polymers that are used as surface materials for composite sheets.

Known ways to achieve this include: using alkylene glycol monoether monoester and cyclic ester as an organic solvent (refer to Patent Literature 1); using an organic solvent that contains a specific quantity of vinyl polymer as a binder resin and a specific quantity of environmentally-friendly polyalkylene glycol dialkyl ether as an organic solvent (refer to Patent Literature 2); and using an organic solvent that contains specific quantities of diethylene glycol ethyl methyl ether and propylene carbonate (refer to Patent Literature 3).

On the other hand, a demand for various types of materials to be used as printing media is resulting in more printing done on roll materials (acrylic, PET, etc.), board materials (glass, plastics, etc.), and other nonabsorbent media in recent years. However, printing traditional nonaqueous inkjet ink compositions (especially nonaqueous inkjet ink compositions using environmentally-friendly organic solvents) on these media presents a problem in that the ink compositions adhere poorly to the printing media.

### Background Art Literature

### Patent Literature

Patent Literature 1: Japanese Patent Laid-open No. 2005-200469
Patent Literature 2: International Patent Laid-open No. 2007/072804
Patent Literature 3: International Patent Laid-open No. 2015/020128

### Summary of the Invention

### Problems to Be Solved by the Invention

An object of the present invention is to provide a nonaqueous ink composition offering excellent adhesion to printing media, rub resistance, and solvent resistance, even when printed on roll materials (acrylic, PET, etc.), board materials (glass, plastics, etc.), and many other types of nonabsorbent media, while, depending on the conditions, exhibiting excellent discharge stability even when used as an inkjet ink composition in high-speed printing.

### Means for Solving the Problems

After studying in earnest to achieve the aforementioned object, the inventors of the present invention found that it could be achieved by compounding in chlorinated polyolefin resin and ketone resin as binder resins.

To be specific, the present invention is characterized as follows:
(1) A nonaqueous ink composition containing a chlorinated polyolefin resin and a ketone resin, wherein the chlorinated polyolefin resin and ketone resin together account for at least 10 percent by mass in the ink composition, the chlorine content in the chlorinated polyolefin resin is 30 to 50 percent by mass, and the chlorinated polyolefin resin and ketone resin are contained at a ratio by mass, calculated by "Chlorinated polyolefin resin/Ketone resin," of 3/7 to 7/3.
(2) A nonaqueous ink composition according to (1), wherein the mass-averaged molecular weight of the chlorinated polyolefin resin is 20,000 to 100,000.
(3) A nonaqueous ink composition according to (1) or (2), used for inkjet printing.

### Effects of the Invention

The nonaqueous ink composition proposed by the present invention contains chlorinated polyolefin resin and ketone resin as binder resins.

This way, a nonaqueous ink composition can be provided which offers excellent adhesion to printing media, while also ensuring excellent rub resistance and solvent resistance, as well as excellent discharge stability, even when used in high-speed printing applications on roll materials (acrylic, PET, etc.), board materials (glass, plastics, etc.), and other nonabsorbent media regardless of the materials of such nonabsorbent media, and which can also be used for inkjet printing.

### Mode for Carrying Out the Invention

### (Chlorinated Polyolefin Resin)

The chlorinated polyolefin resin that constitutes the nonaqueous ink composition proposed by the present invention may be a chlorinated polyethylene, chlorinated polypropylene, or acrylic-modified or urethane-modified chlorinated polyolefin resin, and the like.

Specific examples of chlorinated polyethylene resins that may be used include SUPERCHLON C, L-206, 813A, 803M, 803MW, 803LT, 1026, 803L, 814HS, 390S, 814B, 360T, 370M, 2027MB, 822, 892L, 930, 842LM, 851L, 3228S, 3221S, 2319S, 224H, 223M, 240H, and 260F manufactured by Nippon Paper Industries, and HARDLEN 13-LP, 13-LLP, 14-LWP, 15-LP, 15-LLP, 16-LP, DX-526P, CY-9122P, CY-9124P, HM-21P, M-28P, F-2P, F-6P, CY-1132, and the like manufactured by Toyobo.

Any of these chlorinated polyolefin resins may be used alone, or two or more types may be combined.

The chlorine content in the chlorinated polyolefin resin is 30 to 50 percent by mass, or preferably 33 to 47 percent by mass. It should be noted that the chlorine content indicates the ratio by mass accounted for by the chlorine in the total mass of the chlorinated polyolefin resin.

If the chlorine content in the chlorinated polyolefin resin is less than 30 percent by mass, the chlorinated polyolefin resin may not dissolve sufficiently in various solvents and potentially deposit in the ink, while a chlorine content exceeding 50 percent by mass increases the polarity of the chlorinated polyolefin resin and the adhesion of the ink coating film may drop.

The mass-averaged molecular weight of the chlorinated polyolefin resin is preferably 20,000 to 100,000, or more preferably 25,000 to 95,000.

If the mass-averaged molecular weight of the chlorinated polyolefin resin is less than 20,000, the rub resistance of the ink coating film may drop, while a mass-averaged molecular weight exceeding 100,000 may result in lower discharge stability of the ink when used for inkjet printing.

The mass-averaged molecular weight may be measured using the gel permeation chromatography (GPC) method. For example, chromatography may be performed using a Water 2690 GPC apparatus (manufactured by Waters), a PLgel, 5-µm, MIXED-D column (manufactured by Agilent Technologies) and tetrahydrofuran as a development solvent, under the conditions of 25°C in column temperature, 1 ml/min in flow rate, 10 mg/ml in sample injection concentration in the RI detector, and 100 microliters in injection volume, to obtain an equivalent mass-averaged molecular weight of polystyrene.

### (Ketone Resin)

The ketone resin that constitutes the nonaqueous ink composition proposed by the present invention is not limited in any way, and any known ketone resin may be used so long as it dissolves in the organic solvents mentioned below. Examples include the following: (1) ketone resins obtained by reacting a ketone group-containing compound such as acetophenone or other aromatic ketone compound, or cyclohexane or other alicyclic ketone compound, with formaldehyde or other aldehyde compound; (2) hydroxyl group-containing ketone resins obtained by hydrogenating the foregoing ketone resins; (3) hydroxyl group-containing urethane-modified ketone resins obtained by reacting a hydroxyl group-containing ketone resin with isophorone diisocyanate or other polyisocyanate compound; and the like.

Specific examples of ketone resins that may be used include Ketone Resin K-90 manufactured by Arakawa Chemical Industries, and VariPlus SK, VariPlus AP, VariPlus 1201TF, etc., manufactured by Evonik, and the like.

Any of these ketone resins may be used alone, or two or more types may be combined.

Under the present invention, the total quantity of chlorinated polyolefin resin and ketone resin is 10 to 20 percent by mass, or preferably 12 to 18 percent by mass, in the ink composition.

If the total quantity is less than 10 percent by mass in the ink composition, adhesion, rub resistance, and solvent resistance of the ink coating film may drop, while a total quantity exceeding 20 percent by mass may result in lower discharge stability of the ink when used for inkjet printing.

Under the present invention, the content ratio of chlorinated polyolefin resin and ketone resin, or specifically the value of "Chlorinated polyolefin resin/Ketone resin" calculated based on mass, is 3/7 to 7/3, or preferably 3.5/6.5 to 6.5/3.5.

If the ratio of "Chlorinated polyolefin resin/Ketone resin" is less than 3/7, discharge stability of the ink and adhesion, rub resistance, and solvent resistance of the ink coating film may drop, while a ratio exceeding 7/3 may result in lower adhesion of the ink coating film.

It should be noted that, to the extent that the foregoing performances do not drop, resins other than the chlorinated polyolefin resin and ketone resin, such as ethylene-vinyl acetate resin, acrylic resin, polyester resin, styrene-acrylic resin, styrene-maleate resin, rosin resin, rosin ester resin, petroleum resin, coumarone indene resin, terpenophenolic resin, phenolic resin, urethane resin, melamine resin, urea resin, epoxy resin, cellulose resin, xylene resin, alkyd resin, aliphatic hydrocarbon resin, butyral resin, maleate resin, fumarate resin, etc., can be added.

### (Pigment)

The nonaqueous ink composition proposed by the present invention may use any known inorganic pigment, organic pigment, etc., traditionally used in nonaqueous ink compositions.

Specific examples of known inorganic pigments include carbon black, titanium oxide, zinc flower, zinc oxide, lithopone, iron oxide, aluminum oxide, silicon dioxide, kaolinite, montmorillonite, talc, barium sulfate, calcium carbonate, silica, alumina, cadmium red, red iron oxide, molybdenum red, chrome vermilion, molybdate orange, yellow lead, chrome yellow, cadmium yellow, yellow iron oxide, titanium yellow, chromium oxide, viridian, cobalt green, titanium cobalt green, cobalt chrome green, sea blue, ultramarine blue, Prussian blue, cobalt blue, cerulean blue, manganese violet, cobalt violet, mica, etc.

Specific examples of organic pigments include azo, azomethine, polyazo, phthalocyanine, quinacridone, anthraquinone, indigo, thioindigo, quinophthalone, benzimidazolone, isoindoline, isoindolinone, and other organic pigments, where specific examples in terms of color index designations include Pigment Black 7, Pigment Blue 15, 15:1, 15:3, 15:4, 15:6, 60, Pigment Green 7, 36, Pigment Red 9, 48, 49, 52, 53, 57, 97, 122, 149, 168, 177, 178, 179, 206, 207, 209, 242, 254, 255, Pigment Violet 19, 23, 29, 30, 37, 40, 50, Pigment Yellow 12, 13, 14, 17, 20, 24, 74, 83, 86, 93, 94, 95, 109, 110, 117, 120, 125, 128, 137, 138, 139, 147, 148, 150, 151, 154, 155, 166, 168, 180, 185, Pigment Orange 36, 43, 51, 55, 59, 61, 71, 74, etc.

Any of these pigments may be used alone, or two or more types may be mixed, where the pigment use quantity is preferably 1.0 to 10.0 percent by mass, or more preferably 2.0 to 7.0 percent by mass, relative to the total quantity of nonaqueous ink composition. If the pigment use quantity is less than 1.0 percent by mass, the coloring power tends to become insufficient, while a use quantity exceeding 10.0 percent by mass increases viscosity, and fluidity of the ink tends to drop.

### (Pigment Dispersant)

The nonaqueous ink composition proposed by the present invention may use, as a pigment dispersant, any ionic or nonionic surface-active agent, anionic, cationic, or nonionic polymer compound, and the like.

Among these, a pigment dispersant based on polymer compound is preferred, where preferred examples include the carbodiimide compounds described in Japanese Patent Laid-open No. 2004-083872, International Patent Laid-open No. 2003/076527, and International Patent Laid-open No. 2004/000950, AJISPER (manufactured by Ajinomoto Fine-Techno), SOLSPERSE (manufactured by Lubrizol), DISPERBYK (manufactured by BYK Chemie), EFKA (manufactured by BASF), etc. Any of these pigment dispersants may be used alone, or two or more types may be mixed.

It should be noted that the aforementioned pigment dispersants to be used may be selected as deemed appropriate according to the pigment type and the type of the organic solvent used.

### (Organic Solvent)

The organic solvent that constitutes the nonaqueous ink composition proposed by the present invention is not limited in any way, but preferably diethylene glycol dialkyl ether and propylene carbonate are used. In this case, the diethylene glycol dialkyl ether is used in such a way that its ratio to the propylene carbonate, calculated by "Diethylene glycol dialkyl ether/Propylene carbonate," becomes preferably 3/1 to 8/1, or more preferably 5/1 to 8/1.

By using both diethylene glycol dialkyl ether and propylene carbonate, excellent solubility of chlorinated polyolefin resin and ketone resin, as well as excellent discharge stability, can be achieved.

Also, an alkylene glycol derivative having a flash point of 50 to 150°C, other than diethylene glycol dialkyl ether, may be added to adjust the drying property and further improve the anti-mottling property.

Examples of such alkylene glycol derivatives having a flash point of 50 to 150°C include: ethylene glycol diethyl ether, ethylene glycol dimethyl ether, triethylene glycol dimethyl ether, triethylene glycol diethyl ether, tetraethylene glycol dimethyl ether, and other (poly)ethylene glycol dialkyl ethers; propylene glycol dimethyl ether, propylene glycol diethyl ether, dipropylene glycol dimethyl ether, dipropylene glycol diethyl ether, and other (poly)propylene glycol dialkyl ethers; propylene glycol monomethyl ether, propylene glycol monoethyl ether, propylene glycol monobutyl ether, dipropylene glycol monomethyl ether, dipropylene glycol monoethyl ether, and other polypropylene glycol monoalkyl ethers; propylene glycol monomethyl ether acetate, propylene glycol monoethyl ether acetate, propylene glycol monobutyl ether acetate, dipropylene glycol monomethyl ether acetate, dipropylene glycol monoethyl ether acetate, dipropylene glycol monobutyl ether acetate, and other (poly)propylene glycol monoalkyl ether monoalkyl esters; ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monobutyl ether, and other (poly)ethylene glycol monoethers; ethylene glycol monomethyl acetate, ethylene glycol monoethyl acetate, ethylene glycol monobutyl acetate, diethylene glycol monomethyl acetate, triethylene glycol monomethyl acetate, and other (poly)ethylene glycol monoesters; ethylene glycol diacetate, diethylene glycol diacetate, triethylene glycol diacetate and other (poly)ethylene glycol diesters; and ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, diethylene glycol propyl ether acetate, triethylene glycol monobutyl ether, triethylene glycol ethyl ether acetate, triethylene glycol butyl ether acetate, and other (poly)ethylene glycol monoether monoesters, and the like.

Also, preferably the total quantity of organic solvent accounts for 70.0 to 90.0 percent by mass in the total nonaqueous ink composition. If the total quantity exceeds 90.0 percent by mass, the printability of the obtained ink drops, while a total quantity of less than 70.0 percent by mass invites a rise in viscosity of the ink and consequently discharge stability of the ink from the nozzle tends to drop, which is not desirable.

### (Other Components)

Furthermore, other resins may be added to the nonaqueous ink composition proposed by the present invention as necessary, and various other additives such as surface-active agent, plasticizer, surface-adjustment agent, ultraviolet protective agent, photostabilizer, antioxidant, etc., may also be used, to the extent that doing so does not reduce the effects of the present invention.

### [Manufacturing of Nonaqueous Ink Composition]

Next, a method for manufacturing the nonaqueous ink composition proposed by the present invention using these materials is explained.

The nonaqueous ink composition proposed by the present invention may be obtained by, for example, dispersing and mixing the ingredients using a wet circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE2000, etc.), pearl mill, or other dispersion machine, and then adjusting the viscosity of the nonaqueous ink composition to between 2 and 10 mPa•s.

Preferably the total content of organic solvent in the nonaqueous ink composition proposed by the present invention, which is an amount obtained by subtracting, from the total quantity of ink composition, the total quantity of binder resin, pigment, pigment dispersant, and other additives that may be used as necessary, is changed as deemed appropriate so that ink viscosity falls within the aforementioned range.

### [Applications]

The nonaqueous ink composition proposed by the present invention may be used for known applications, but it is particularly suitable for use on nonabsorbent surface layers of base materials. Nonabsorbent materials include metals, resins, ceramics, etc., but among these, preferably the present invention is used on glass, acrylic, aluminum, polyolefin resins, PET resins, ABS resins, vinyl chloride resins, etc., from the viewpoints of adhesion, rub resistance, solvent resistance, etc.

### Examples

The present invention is explained in greater detail by citing examples below; however, it should be noted that the present invention is not limited to these examples. It should also be noted that, unless otherwise specified, "%" indicates "percent by mass," while "part" indicates "part by mass."

The following materials were used in the Examples and Comparative Examples described below.

### <Dispersants>

SOLSPERSE 39000 (manufactured by Lubrizol)
SOLSPERSE 56000 (manufactured by Lubrizol)
PB822: AJISPER PB822 (manufactured by Ajinomoto Fine-Techno)

### <Pigments>

MA7: Carbon Black MA7 (manufactured by Mitsubishi Chemical)
D7110F: Heliogen Blue D7110F (manufactured by BASF)
G01: Levascreen Yellow G01 (manufactured by LANXESS)
RGT: FASTOGEN Super Magenta RGT (manufactured by DIC)

### <Chlorinated Polyolefin Resins>

390S: SUPERCHLON 390S (manufactured by Nippon Paper Industries, chlorinated polypropylene, chlorine content 36%, mass-averaged molecular weight 80,000)
814HS: SUPERCHLON 814HS (manufactured by Nippon Paper Industries, chlorinated polypropylene, chlorine content 41%, mass-averaged molecular weight 20,000)
803M: SUPERCHLON 803M (manufactured by Nippon Paper Industries, chlorinated polypropylene, chlorine content 30%, mass-averaged molecular weight 160,000)
L206: SUPERCHLON L-206 (manufactured by Nippon Paper Industries, chlorinated polypropylene, chlorine content 32%, mass-averaged molecular weight 9,000)

### <Ketone Resins>

SK: VariPlus SK (manufactured by Evonik, aromatic ketone-formaldehyde condensed hydrogenated ketone resin)
AP: VariPlus AP (manufactured by Evonik, aromatic ketone-formaldehyde condensed ketone resin)

### <Acrylic Resin>

BR-87: Dianal BR-87 (manufactured by Mitsubishi Rayon, glass transition temperature 105°C, mass-averaged molecular weight 25,000)

### <Vinyl Chloride-Vinyl Acetate Resin>

SOLBIN C: SOLBIN C (manufactured by Nissin Chemical Industry, vinyl chloride/vinyl acetate = 87/13)

### <Polyester Resin>

FC1565: Diacron FC1565 (manufactured by Mitsubishi Rayon, polyester resin)

### <Solvents>

DEDG: Diethylene glycol diethyl ether
EDM: Diethylene glycol ethyl methyl ether
PC: Propylene carbonate
DPMA: Dipropylene glycol methyl ether acetate

### (Examples 1 to 11 and Comparative Examples 1 to 10)

### (Manufacturing of Colored Base Inks>

### <Manufacturing of Nonaqueous Black Base Inkjet Ink>

Ten parts of pigment dispersant (SOLSPERSE 39000) were dissolved in 65 parts of diethylene glycol diethyl ether, into which 25 parts of pigment (MA7) were mixed under agitation, after which the mixture was kneaded using a bead mill, to obtain a nonaqueous black base inkjet ink.

### <Manufacturing of Nonaqueous Cyan Base Inkjet Ink>

Ten parts of pigment dispersant (SOLSPERSE 56000) were dissolved in 65 parts of diethylene glycol diethyl ether, into which 25 parts of pigment (D7110F) were mixed under agitation, after which the mixture was kneaded using a bead mill, to obtain a nonaqueous cyan base inkjet ink.

### <Manufacturing of Nonaqueous Yellow Base Inkjet Ink>

Ten parts of pigment dispersant (PB822) were dissolved in 65 parts of diethylene glycol diethyl ether, into which 25 parts of pigment (G01) were mixed under agitation, after which the mixture was kneaded using a bead mill, to obtain a nonaqueous yellow base inkjet ink.

### <Manufacturing of Nonaqueous Magenta Base Inkjet Ink>

Ten parts of pigment dispersant (SOLSPERSE 56000) were dissolved in 65 parts of diethylene glycol diethyl ether, into which 25 parts of pigment (RGT) were mixed under agitation, after which the mixture was kneaded using a bead mill, to obtain a nonaqueous magenta base inkjet ink.

### <Manufacturing of Nonaqueous Inkjet Ink Compositions>

The respective materials were mixed under agitation according to the recipes in Table 1 (the blending ratio of each material is indicated by percent by mass), to obtain the nonaqueous inkjet ink compositions in Examples 1 to 11 and Comparative Examples 1 to 10.

### (Printing Method and Printed Matters)

Each of the nonaqueous inkjet ink compositions in Examples 1 to 11 and Comparative Examples 1 to 10 was charged to a commercial inkjet printer, which was then used to perform solid printing on each printing medium in a high-speed printing mode, to obtain the printed matters in Examples 1 to 11 and Comparative Examples 1 to 10.

### <Evaluation>

The following properties were evaluated on the printed matters obtained using the nonaqueous inkjet ink compositions in Examples 1 to 11 and Comparative Examples 1 to 10. In the following evaluations, A and B represent levels acceptable for practical use, while C and D represent levels not acceptable for use as a product.

### (Viscosity)

The nonaqueous inkjet ink compositions in Examples 1 to 11 and Comparative Examples 1 to 10 were measured for viscosity at 25°C using a viscometer (RE100L manufactured by Toki Sangyo).

### (Adhesion)

The nonaqueous inkjet ink compositions in Examples 1 to 11 and Comparative Examples 1 to 10 were printed on each of the printing media indicated under Adhesion in Table 1, after which a piece of clear adhesive tape (product name: CELLOTAPE (registered trademark), manufactured by Nichiban) was pressed onto the printed surface and then peeled, and the results were evaluated based on the degree of separation of the printed coating film.

### Evaluation Criteria

A: There was no peeling.
B: There was some peeling.
C: The coating film peeled by at least a half.
D: The coating film peeled completely.

### (Discharge Stability)

The nonaqueous inkjet ink compositions in Examples 1 to 11 and Comparative Examples 1 to 10 were printed on polyvinyl chloride sheets (product name: Kapjet Gloss Banner, manufactured by Filmolux), and the results were evaluated based on the number of sheets on which unprinted areas appeared.

### Evaluation Criteria

A: Unprinted areas appeared on the 71st or subsequent sheet, or no unprinted areas appeared until the 100th sheet.
B: Unprinted areas appeared on any of the 51st through 70th sheets.
C: Unprinted areas appeared on any of the 31st through 50th sheets.
D: Unprinted areas appeared on the 30th or earlier sheet.

### (Rub Resistance)

The nonaqueous inkjet ink compositions in Examples 1 to 11 and Comparative Examples 1 to 10 were transferred onto a polyvinyl chloride sheet (product name: Kapjet Gloss Banner, manufactured by Filmolux) using a Mayer bar (0.15 mm), after which the coating film was rubbed 100 times with a bleached cloth using a Gakushin color fastness tester (manufactured by Daiei Kagaku Seiki MFG) under a force of 500 g, and the degree of removal of the coating film was visually observed and the result was evaluated according to the criteria below:
A: The coating film was not removed.
B: The coating film had surface abrasions.
C: The coating film was somewhat removed.
D: The coating film was visibly removed.

### (Solvent Resistance)

The nonaqueous inkjet ink compositions in Examples 1 to 11 and Comparative Examples 1 to 10 were transferred onto a polyvinyl chloride sheet (product name: Kapjet Gloss Banner, manufactured by Filmolux) using a Mayer bar (0.15 mm), after which the coating film was rubbed five times with an ethanol-moistened bleached cloth using a Gakushin color fastness tester (manufactured by Daiei Kagaku Seiki MFG) under a force of 200 g, and the degree of removal of the coating film was visually observed and the result was evaluated according to the criteria below:
A: The coating film was not removed.
B: The coating film had surface abrasions.
C: The coating film was somewhat removed.
D: The coating film was visibly removed.

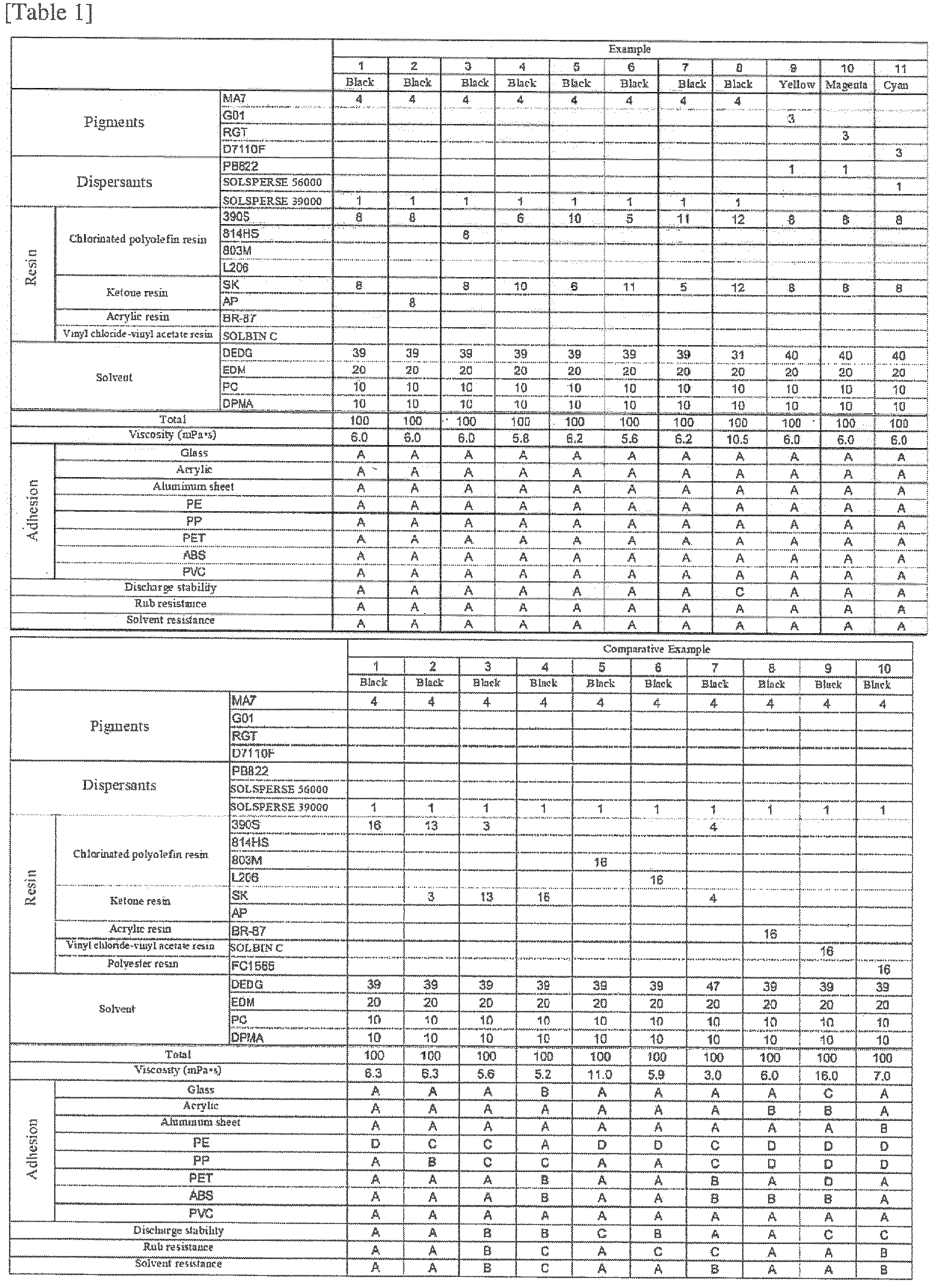

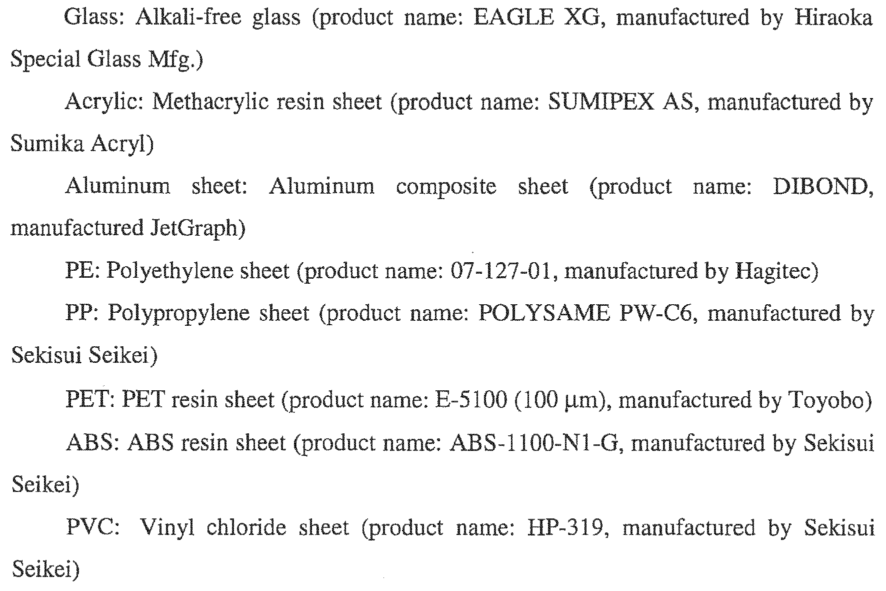

According to the results of Examples 1 to 11 shown in Table 1, these nonaqueous ink compositions conforming to the compositional makeup proposed by the present invention had viscosities appropriate for inkjet printing, and the obtained inks also demonstrated balanced properties such as excellent adhesion, discharge stability, rub resistance, and solvent resistance. On the other hand, Comparative Examples 1 to 10 failed to provide inks that excelled in all of these properties.

In addition, both Comparative Examples 2 and 3 failed to achieve sufficient adhesion to the polyethylene sheet and polypropylene sheet; whereas Example 1, which falls in the middle of these Comparative Examples in terms of the ratio of chlorinated polyolefin resin and ketone resin, demonstrated excellent adhesion to all sheets including polyethylene sheets and polypropylene sheets, thereby confirming the excellent effects of the present invention.

## Claims

1. A nonaqueous ink composition containing a chlorinated polyolefin resin and a ketone resin, wherein the chlorinated polyolefin resin and the ketone resin together account for at least 10 percent by mass in the ink composition, a chlorine content in the chlorinated polyolefin resin is 30 to 50 percent by mass; and the chlorinated polyolefin resin and the ketone resin are contained at a ratio by mass, calculated by "Chlorinated polyolefin resin/Ketone resin," of 3/7 to 7/3.

2. The nonaqueous ink composition according to according to claim 1, wherein a mass-averaged molecular weight of the chlorinated polyolefin resin is 20,000 to 100,000.

3. The nonaqueous ink composition according to claim 1 or 2, used for inkjet printing.
